# FASCICULE DE BREVET EUROPEEN

(11) **EP 3 300 985 B1**
(45) Date de publication et mention de la délivrance du brevet: **24.03.2021**
(21) Numéro de dépôt: 17190690.2
(22) Date de dépôt: 12.09.2017
(51) Int. Cl.: B61D 33/00, B61D 37/00, B60N 2/015, B64D 11/06, B60N 3/00, B60N 2/02

(54) **VEHICULE DE TRANSPORT DE VOYAGEURS A MOBILIERS MODULABLES**
TRANSPORTFAHRZEUG FÜR REISENDE MIT MODULIERBAREM MOBILIAR
PASSENGER TRANSPORT VEHICLE WITH MODULAR FURNITURE

(30) Priorité: 30.09.2016 FR 1659436
(43) Date de publication de la demande: 04.04.2018
(73) Titulaire: SNCF Voyageurs, 93200 Saint-Denis (FR)
(72) Inventeur: GOERES, David, 72000 Le Mans (FR)
(74) Mandataire: IPAZ

(56) Documents cités:
- EP-A2- 2 298 609
- EP-B1- 2 099 675
- WO-A1-01/87665

## Description

L'invention concerne un véhicule de transport de voyageurs à mobiliers modulables.

Le domaine de l'invention est le domaine des véhicules de transport, et plus précisément le domaine d'alimentation électrique de mobiliers, tels que des sièges ou des tables, dans un véhicule ferroviaire comme un train, un tram-train, un tramway, etc.

### ETAT DE LA TECHNIQUE

On connait les véhicules de transport comprenant du mobilier, tel qu'un siège ou une table, fixé dans un habitacle du véhicule par des rails de fixation. Ces rails permettent le déplacement du mobilier sans créer des points de fixation supplémentaires. Le mobilier comprend généralement un circuit électrique, par exemple une alimentation USB, un système d'éclairage, un dispositif d'ajustement de sièges, etc. Ce circuit est alimenté par des sources de tension généralement comprises entre 72V et 120V, et fixées immobiles dans l'habitacle. Le déplacement du mobilier nécessite donc une modification du câblage ou la création de nouvelles sources de tension. Ces véhicules sont complexes, coûteux et chronophages à moduler.

Une solution pour augmenter la modularité de ces véhicules consiste à équiper le mobilier du véhicule avec des batteries. Une autre solution consiste à augmenter le nombre de source de tensions dans l'habitacle par rapport au nombre de mobiliers utilisés. Cependant, ces solutions sont coûteuses et complexes à réaliser.

On connait de EP 2 298 609 A2 et WO 01/87665 A1 un véhicule selon le préambule de la revendication 1.

Un but de la présente invention est de remédier à ces inconvénients.

Un autre but de la présente invention est de proposer un véhicule de transport de voyageurs avec une plus grande modularité du mobilier.

Un autre but de la présente invention est de proposer un véhicule de transport de voyageurs avec une plus grande modularité du mobilier moins coûteux, complexe, et chronophage à réaliser et à manipuler.

### EXPOSE DE L'INVENTION

Au moins un des objectifs précités est atteint par un véhicule de transport de voyageurs, de préférence ferroviaire, comprenant au moins un mobilier, tel qu'un siège ou une table, dans un habitacle dudit véhicule selon la revendication 1.

Avec le véhicule selon l'invention, l'alimentation du circuit électrique du mobilier s'effectue directement au travers d'au moins un rail de fixation, dit rail de fixation électrique. Le déplacement du mobilier ne nécessite donc pas une modification du câblage ou la création de nouvelles sources de tension dans l'habitacle pour assurer l'alimentation du circuit électrique. Le véhicule selon l'invention est ainsi moins couteux et plus simple à réaliser tout en disposant d'une plus grande modularité du mobilier. Par ailleurs, l'alimentation au travers d'au moins un rail de fixation électrique permet le déplacement du mobilier de façon rapide et ergonomique tout en maintenant l'alimentation de son circuit électrique.

Ledit rail électrique étant prévu pour conduire un signal électrique à très basse tension, l'habitacle ne nécessite pas la mise en place de moyens d'isolation, de fils électrique ou encore de pistes conductrices, qui sont coûteux et complexes à mettre en œuvre. Le véhicule selon l'invention est ainsi moins couteux et moins complexe à réaliser. De plus, le véhicule est plus sécurisé.

Selon l'invention le rail électrique est formé par une structure électriquement conductrice, prévue pour conduire le signal électrique à très basse tension.

Dans une version de réalisation du véhicule selon l'invention, le signal électrique peut avoir une tension comprise entre 0V et 24V, en particulier égale à 12V.

L'alimentation du circuit électrique à très basse tension n'est pas dangereuse en cas de contact accidentel par les voyageurs. Le véhicule selon l'invention est donc plus sécurisé.

De plus, l'au moins un rail de fixation électrique peut être disposé dans/sur une paroi de l'habitacle du véhicule selon l'invention. Il peut être disposé dans/sur une paroi latérale, du plancher et/ou du plafond de l'habitacle.

Dans un mode de réalisation, le véhicule selon l'invention peut comprendre un unique rail de fixation électrique comprenant au moins deux points de contact électrique, l'un transportant un potentiel électrique plus grand que l'autre.

Préférentiellement, lesdits points de contact électrique peuvent être isolés électriquement entre eux, du reste dudit rail de fixation, et de l'habitacle du véhicule selon l'invention.

Dans une version de réalisation préférée du véhicule selon l'invention, le mobilier est fixé au travers d'au moins deux rails de fixation électriques, l'un desdits rails électriques transportant un potentiel électrique plus grand qu'un autre desdits rails électriques.

Lesdits au moins deux rails de fixation électriques peuvent être isolés électriquement l'un de l'autre, et par rapport à l'habitacle.

En particulier, le mobilier peut être fixé au travers de deux rails de fixation électriques. L'un desdits rails électriques peut transporter un potentiel électrique compris entre 10V et 24V, en particulier égale à 12V, tandis que l'autre rail électrique peut être relié à la terre.

Dans un mode de réalisation du véhicule selon l'invention, au moins un rail de fixation électrique peut comprendre au moins une piste conductrice d'électricité.

Préférentiellement, l'au moins une piste conductrice d'électricité peut être isolée électriquement du rail de fixation électrique par un matériau isolant tel que le bois, un composite, un élastomère, etc.

Dans une version de réalisation du véhicule selon l'invention, le mobilier peut comprendre :
- au moins un pied ou un bras de support, pour la fixation dudit mobilier audit au moins un rail de fixation électrique, électriquement conducteur, et/ou
- au moins un fil électrique, en particulier disposés dans/sur un pied ou un bras de support pour la fixation dudit mobilier audit au moins un rail de fixation électrique, et/ou
- au moins un moyen de fixation audit au moins un rail de fixation électrique, électriquement conducteur ;
prévu pour transporter le signal électrique provenant dudit au moins un rail de fixation électrique.

Le mobilier peut comprendre au moins un pied, ou un bras, réalisé dans un matériau conducteur et peuvent être reliés au circuit électrique pour l'alimenter. L'au moins un pied ou un bras peut être isolé électriquement d'un autre au moins un pied ou un bras, du reste dudit mobilier et de l'habitacle du véhicule.

Alternativement, au moins un fil électrique peut être inséré dans au moins un pied ou un bras du mobilier permettant de fixer ledit mobilier au rail de fixation électrique. Le fil électrique peut être isolé de l'au moins un pied ou un bras. L'au moins un fil électrique peut comprendre un balai électrique, une broche ou une fiche, pour assurer le contact avec un rail de fixation électrique et ainsi assurer l'alimentation du circuit électrique.

Alternativement ou en plus, le mobilier peut comprendre un moyen de fixation électriquement conducteur, relié au circuit électrique du mobilier pour l'alimenter. Le moyen de fixation peut être isolé électriquement du mobilier et de l'habitacle du véhicule selon l'invention.

Préférentiellement, le circuit électrique du mobilier peut alimenter :
- une prise USB,
- un système d'éclairage,
- un moyen de réglage du mobilier,
- un dispositif de chauffage,
- une sortie audio, et/ou
- une sortie vidéo.

Alternativement ou en plus, le signal électrique très basse tension peut être fourni par un réseau à courant porteur pour diffuser un accès internet ou toute autre information. Dans ce cas, le circuit électrique du mobilier peut être prévu pour le, ou dédié au, transport dudit courant porteur pour alimenter par exemple une interface de connexion à Internet, en particulier prévue dans le mobilier.

Avantageusement, le véhicule selon l'invention peut être :
- un véhicule de type ferroviaire tel qu'un train, un tramway ou un tram-train,
- un véhicule de type avion, ou
- un véhicule de type bus.

### DESCRIPTION DES FIGURES ET MODES DE REALISATION

D'autres avantages et caractéristiques apparaîtront à l'examen de la description détaillée d'exemples nullement limitatifs, et des dessins annexés sur lesquels :
- la FIGURE 1 est une représentation schématique d'un premier exemple de réalisation d'un véhicule selon l'invention ;
- la FIGURE 2 est une représentation schématique d'un deuxième exemple de réalisation d'un véhicule selon l'invention ;
- la FIGURE 3 est une représentation schématique d'un troisième exemple de réalisation d'un véhicule selon l'invention ; et
- la FIGURE 4 est une représentation schématique d'un quatrième exemple de réalisation d'un véhicule ne faisant pas partie de l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure tant que ces variantes sont comprises dans le cadre défini par les revendications. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure. En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

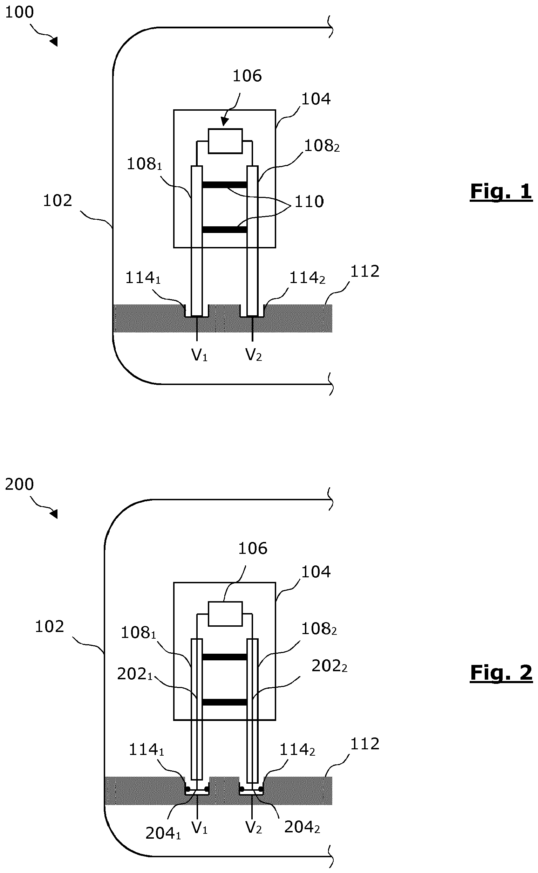

La FIGURE 1 est une représentation schématique d'un premier exemple de réalisation d'un véhicule selon l'invention.

Le véhicule 100, représenté sur la FIGURE 1, comprend un habitacle 102 comprenant un mobilier 104. Le mobilier 104 comprend un circuit électrique 106 alimentant, par exemple, une prise USB, un dispositif d'éclairage, etc.

Le mobilier 104 comprend aussi des pieds 108₁-108₂, faits dans un matériau conducteur. Les pieds 108 sont reliés au circuit électrique 106 pour l'alimenter. Les pieds 108 sont isolés électriquement entre eux par une structure 110 en matériau isolant comme le bois ou le plastique.

Le mobilier 104 est fixé à un plancher 112 de l'habitacle 102 par des rails de fixation 114₁-114₂. Le mobilier 104 peut être déplacé dans l'habitacle 102 au travers des rails 114.

Les rails de fixation 114 sont électriquement conducteurs, le rail 114₁ transportant un potentiel V₁ et le rail 114₂ transportant un potentiel V₂, inférieur au potentiel V₁. Le plancher 112 est fait dans un matériau isolant pour assurer l'isolation électrique entre les rails 114.

De plus, les pieds conducteurs 108 sont en contact avec les rails de fixation 114, alimentant ainsi le circuit électrique 106.

La FIGURE 2 est une représentation schématique d'un deuxième exemple de réalisation d'un véhicule selon l'invention.

Le véhicule 200 de la FIGURE 2 comprend les mêmes éléments que le véhicule 100 de la FIGURE 1. Le véhicule 200 se différencie de ce dernier par les pieds 108 qui sont faits dans un matériau isolant, tel que le plastique par exemple. De plus, chaque pied 108₁ et 108₂ est traversé par un fil électrique, respectivement, 202₁ et 202₂. Les fils électriques 202 sont reliés au circuit électrique 106 pour l'alimenter.

Par ailleurs, les fils électriques 202 sont en contact avec les rails 114 au travers de balai électrique 204₁-204₂ pour assurer l'alimentation du circuit électrique 106.

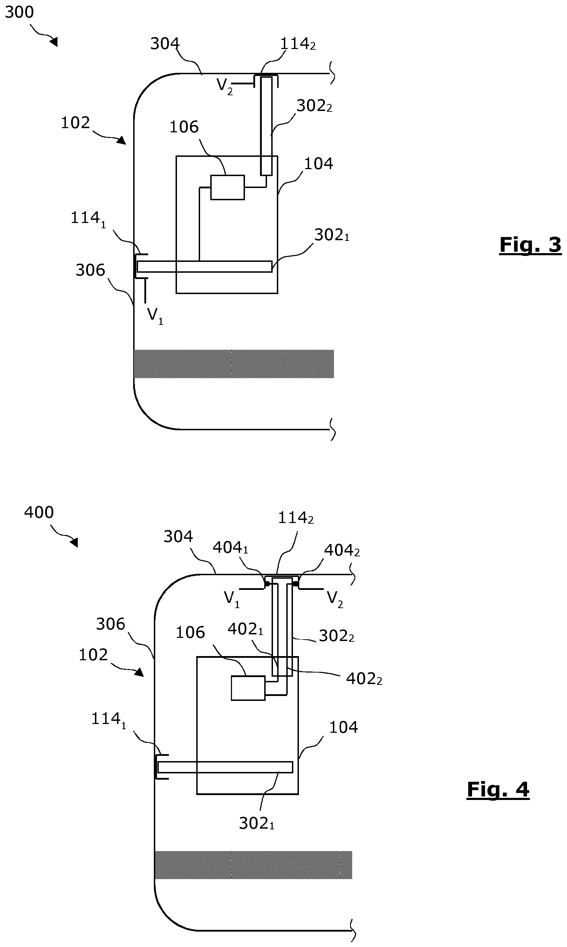

La FIGURE 3 est une représentation schématique d'un troisième exemple de réalisation d'un véhicule selon l'invention.

Le véhicule 300 de la FIGURE 3 comprend les mêmes éléments que les véhicules 100 et 200 des FIGURES 1 et 2, respectivement.

Le mobilier 104 comprend deux bras de support 302₁-302₂ électriquement conducteurs et reliés au circuit électrique 106.

A la différence du véhicule des FIGURES 1 et 2, le rail 114₁ est disposé sur une paroi 306 latérale de l'habitacle 102, tandis que le rail 114₂ est agencé dans un plafond 304 de l'habitacle 102.

Les bras de support 302₁-302₂ sont agencés en contact, respectivement, avec les rails 114₁-114₂ et alimentent ainsi le circuit électrique 106.

Alternativement, dans le véhicule 300 de la FIGURE 3, le contact électrique entre le circuit électrique et les rails 114 peut être réalisé de manière similaire au mode de réalisation représenté sur la FIGURE 2.

La FIGURE 4 est une représentation schématique d'un quatrième exemple de réalisation d'un véhicule ne faisant pas partie de l'invention.

Le véhicule 400 de la FIGURE 4 comprend les mêmes éléments que les véhicules 100, 200 et 300 des FIGURES 1, 2 et 3, respectivement.

Le mobilier 104 du véhicule 400 est disposé de façon similaire à celui du véhicule 300. A la différence de ce dernier, les deux bras 302 ne sont pas électriquement conducteurs. Le bras 302₂ comprend en outre deux fils électriques 402₁-402₂ reliés au circuit électrique 106 pour l'alimenter.

De plus, les rails 114 ne sont pas électriquement conducteurs. Seul le rail 114₂ comprend deux points de contact électrique 404₁-404₂ transportant, respectivement, les potentiels V₁ et V₂. Les points de contact électrique 404 sont isolés entre eux, par exemple par le rail 114₂ qui est réalisé dans un matériau isolant.

Les fils électriques 402₁-402₂ sont en contact, respectivement, avec les points de contact électrique 404₁-404₂, alimentant ainsi le circuit électrique 106.

Bien sûr, l'invention n'est pas limitée aux exemples qui viennent d'être décrits et de nombreux aménagements peuvent être apportés à ces exemples sans sortir du cadre de l'invention défini par les revendications.

Par exemple, le mobilier peut alternativement être une table ou tout autre mobilier d'un habitacle d'un véhicule ferroviaire nécessitant une alimentation. De plus, le mobilier peut être fixé dans l'habitacle par un unique rail de fixation qui est alors un rail de fixation électrique.

## Revendications

1. Véhicule (100;200;300;400) de transport de voyageurs, de préférence ferroviaire, comprenant au moins un mobilier (104), tel qu'un siège ou une table, dans un habitacle (102) dudit véhicule (100;200;300;400) :
• ledit mobilier (104) :
- comprenant un circuit électrique (106), et
- étant fixé au travers d'au moins un rail de fixation (114) prévu dans ledit habitacle (102) ;
• ledit circuit électrique (106) est alimenté, par un signal électrique très basse tension, au travers d'au moins un desdits rails de fixation (114), dit rail de fixation électrique, et
• au moins un rail de fixation électrique (114) est électriquement conducteur et transporte le signal électrique ;
**caractérisé en ce que** le rail électrique est formé par une structure électriquement conductrice, prévue pour conduire le signal électrique à très basse tension.

2. Véhicule (100;200;300;400) selon la revendication précédente, **caractérisé en ce que** le signal électrique a une tension comprise entre 0V et 24V, en particulier égale à 12V.

3. Véhicule (400) selon l'une quelconque des revendications précédentes, **caractérisé en ce qu'**il comprend un unique rail de fixation électrique (114) comprenant au moins deux points de contact électrique (404), l'un transportant un potentiel électrique plus grand que l'autre.

4. Véhicule (100;200;300) selon l'une quelconque des revendications précédentes, **caractérisé en ce que** le mobilier (104) est fixé au travers d'au moins deux rails de fixation électriques (114), l'un desdits rails électriques (114₁) transportant un potentiel électrique plus grand qu'un autre desdits rails électriques (1142).

5. Véhicule (400) selon l'une quelconques des revendications précédentes, **caractérisé en ce qu'**au moins un rail de fixation électrique (114₂) comprend au moins une piste conductrice d'électricité.

6. Véhicule (100;200;300;400) selon l'une quelconques des revendications précédentes, **caractérisé en ce que** le mobilier (104) comprend :
- au moins un pied (108) ou un bras de support (302), pour la fixation dudit mobilier (104) audit au moins un rail de fixation électrique (114), électriquement conducteur, et/ou
- au moins un fil électrique (202), en particulier disposés dans/sur un pied (108) ou un bras de support (302) pour la fixation dudit mobilier (104) audit au moins un rail de fixation électrique (114), et/ou
- au moins un moyen de fixation audit au moins un rail de fixation électrique (114), électriquement conducteur ;
prévu pour transporter le signal électrique provenant dudit au moins un rail de fixation électrique (114).

7. Véhicule (100;200;300;400) selon l'une quelconque des revendications précédentes, **caractérisé en ce que** le circuit électrique (106) du mobilier (104) alimente :
- une prise USB,
- un système d'éclairage,
- un moyen de réglage du mobilier,
- un dispositif de chauffage,
- une sortie audio,
- une sortie vidéo, et/ou
- une interface de connexion à un réseau de type Internet

8. Véhicule (100;200;300;400) selon l'une quelconque des revendications précédentes, **caractérisé en ce qu'**il est :
- un véhicule de type ferroviaire, tel qu'un train, un tramway ou un tram-train,
- un véhicule de type avion, ou
- un véhicule de type bus.

## Patentansprüche

1. Fahrzeug (100; 200; 300; 400) zur Fahrgastbeförderung, vorzugsweise ein Schienenfahrzeug, umfassend mindestens ein Möbelstück (104), wie z. B. einen Sitz oder einen Tisch, in einem Fahrgastraum (102) des Fahrzeugs (100; 200; 300; 400):
• wobei das Möbelstück (104):
- eine elektrische Schaltung (106) umfasst, und
- durch mindestens eine in dem Fahrgastraum (102) angeordnete Befestigungsschiene (114) befestigt ist;
• wobei die elektrische Schaltung (106) durch ein elektrisches Signal mit sehr niedriger Spannung gespeist wird, und zwar über mindestens eine der Befestigungsschienen (114), die elektrische Befestigungsschiene, und
• mindestens eine elektrische Befestigungsschiene (114) elektrisch leitend ist und das elektrische Signal überträgt;
**dadurch gekennzeichnet, dass** die elektrische Schiene durch eine elektrisch leitende Struktur gebildet wird, die dazu bestimmt ist, das elektrische Signal bei sehr niedriger Spannung zu leiten.

2. Fahrzeug (100; 200; 300; 400) nach dem vorhergehenden Anspruch, **dadurch gekennzeichnet, dass** das elektrische Signal eine Spannung zwischen 0 V und 24 V, insbesondere gleich 12 V, aufweist.

3. Fahrzeug (400) nach einem der vorhergehenden Ansprüche, **dadurch gekennzeichnet, dass** es eine einzige elektrische Befestigungsschiene (114) umfasst, die mindestens zwei elektrische Kontaktpunkte (404) aufweist, von denen einer ein höheres elektrisches Potential als der andere führt.

4. Fahrzeug (100; 200; 300) nach einem der vorhergehenden Ansprüche, **dadurch gekennzeichnet, dass** das Möbelstück (104) durch mindestens zwei elektrische Befestigungsschienen (114) befestigt ist, wobei eine der elektrischen Schienen (114₁) ein größeres elektrisches Potential als eine andere der elektrischen Schienen (114₂) führt.

5. Fahrzeug (400) nach einem der vorhergehenden Ansprüche, **dadurch gekennzeichnet, dass** mindestens eine elektrische Befestigungsschiene (114₂) mindestens eine elektrisch leitende Spur aufweist.

6. Fahrzeug (100; 200; 300; 400) nach einem der vorhergehenden Ansprüche, **dadurch gekennzeichnet, dass** das Möbelstück (104) Folgendes umfasst:
- mindestens einen Fuß (108) oder einen Tragarm (302), um das Mobiliar (104) an der mindestens einen elektrisch leitenden elektrischen Befestigungsschiene (114) zu befestigen, und/oder
- mindestens einen elektrischen Draht (202), der insbesondere in/an einem Fuß (108) oder einem Tragarm (302) zur Befestigung des Möbelstücks (104) an der mindestens einen elektrischen Befestigungsschiene (114) angeordnet ist, und/oder
- mindestens ein Mittel zur Befestigung an der mindestens einen elektrisch leitenden elektrischen Befestigungsschiene (114);
vorgesehen für die Übertragung des elektrischen Signals von der mindestens einen elektrischen Befestigungsschiene (114).

7. Fahrzeug (100; 200; 300; 400) nach einem der vorhergehenden Ansprüche, **dadurch gekennzeichnet, dass** die elektrische Schaltung (106) des Möbelstücks (104) die folgenden Elemente versorgt:
- einen USB-Anschluss,
- ein Beleuchtungssystem,
- ein Mittel zum Einstellen des Möbelstücks,
- eine Heizvorrichtung,
- einen Audioausgang,
- einen Videoausgang und/oder
- eine Schnittstelle zum Verbinden mit einem Internet-Netzwerk.

8. Fahrzeug (100; 200; 300; 400) nach einem der vorhergehenden Ansprüche, **dadurch gekennzeichnet, dass** es Folgendes ist:
- ein Schienenfahrzeug, wie z. B. ein Zug, eine Straßenbahn oder eine Regionalstadtbahn,
- ein Luftfahrzeug, oder
- ein Busfahrzeug.

## Claims

1. Vehicle (100; 200; 300; 400) for transporting passengers, preferably a railway vehicle, comprising at least one item of furniture (104), such as a seat or a table, in a passenger compartment (102) of said vehicle (100; 200; 300; 400):
• said item of furniture (104):
- comprising an electric circuit (106), and
- being attached by means of at least one attachment rail (114) provided in said passenger compartment (102);
• said electric circuit (106) being powered, by a very low voltage electric signal, by means of at least one of said attachment rails (114), referred to as an electric attachment rail, and
• at least one electric attachment rail (114) being electrically conductive and carrying the electric signal;
**characterized in that** the electric rail is formed by an electrically conductive structure designed to conduct the electric signal at very low voltage.

2. Vehicle (100; 200; 300; 400) according to the preceding claim, **characterized in that** the electric signal has a voltage between 0V and 24V, in particular equal to 12V.

3. Vehicle (400) according to either of the preceding claims, **characterized in that** it comprises a single electric attachment rail (114) comprising at least two electric contact points (404), one carrying a greater electric potential that the other.

4. Vehicle (100; 200; 300) according to any of the preceding claims, **characterized in that** the item of furniture (104) is attached by means of at least two electric attachment rails (114), one of said electric rails (114₁) carrying an electric potential greater than another of said electric rails (114₂).

5. Vehicle (400) according to any of the preceding claims, **characterized in that** at least one electric attachment rail (114₂) comprises at least one electrically conductive track.

6. Vehicle (100; 200; 300; 400) according to any of the preceding claims, **characterized in that** the item of furniture (104) comprises:
- at least one foot (108) or support arm (302), for attaching said item of furniture (104) to said at least one electric attachment rail (114), which foot or arm is electrically conductive, and/or
- at least one electric wire (202), in particular arranged in/on a foot (108) or a support arm (302) for attaching said item of furniture (104) to said at least one electric attachment rail (114), and/or
- at least one means for attaching to said at least one electric attachment rail (114), which means is electrically conductive;
designed to carry the electric signal from said at least one electric attachment rail (114).

7. Vehicle (100; 200; 300; 400) according to any of the preceding claims, **characterized in that** the electric circuit (106) of the item of furniture (104) powers:
- a USB socket,
- a lighting system,
- a means for adjusting the item of furniture,
- a heating device,
- an audio output,
- a video output, and/or
- an interface for connecting to an Internet network.

8. Vehicle (100; 200; 300; 400) according to any of the preceding claims, **characterized in that** it is:
- a railway vehicle, such as a train, a tram or a tram-train,
- an airplane vehicle, or
- a bus vehicle.
